(19) Europäisches Patentamt
European Patent Office
Office européen des brevets

(11) **EP 4 648 462 A1**

(12) **EUROPEAN PATENT APPLICATION**
published in accordance with Art. 153(4) EPC

(43) Date of publication:
**12.11.2025 Bulletin 2025/46**

(21) Application number: **23921961.1**

(22) Date of filing: **17.02.2023**

(51) International Patent Classification (IPC):
**H04W 24/02** $^{(2009.01)}$

(52) Cooperative Patent Classification (CPC):
**H04W 24/02**

(86) International application number:
**PCT/CN2023/076784**

(87) International publication number:
**WO 2024/168811 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **ZHOU, Mingyue**
**Shenzhen, Guangdong 518129 (CN)**
• **WANG, Lei**
**Shenzhen, Guangdong 518129 (CN)**
• **XU, Xiuqiang**
**Shenzhen, Guangdong 518129 (CN)**
• **LUO, Hejia**
**Shenzhen, Guangdong 518129 (CN)**

(74) Representative: **Grünecker Patent- und Rechtsanwälte PartG mbB Leopoldstraße 4 80802 München (DE)**

(54) **METHOD FOR CONFIGURING GRANT-FREE RESOURCE, AND COMMUNICATION APPARATUS**

(57) This application provides a scheduling-free resource configuration method and a communication apparatus, and may be applied to a scenario of configuring a scheduling-free resource in a non-terrestrial network or a terrestrial network. In the method, a network device determines an indication sequence. The indication sequence indicates a scheduling-free resource (namely, a first scheduling-free resource) that is in scheduling-free resources of a terminal device and that can be used for scheduling-free transmission. The network device sends first information to the terminal device. The first information is used to determine the indication sequence. After determining the indication sequence based on the first information, the terminal device performs the scheduling-free transmission based on the first scheduling-free resource determined, based on the indication sequence, from the scheduling-free resources configured by the network side. This helps avoid a transmission failure caused by scheduling transmission performed by the terminal device in a coverage hole.

FIG. 5

## Description

## TECHNICAL FIELD

Embodiments of this application relate to a non-terrestrial network, and more specifically, to a scheduling-free resource configuration method and a communication apparatus.

## BACKGROUND

Compared with a conventional terrestrial network, a non-terrestrial network (non-terrestrial network, NTN) has significant characteristics. One of the characteristics is that a cell area is very large, and a cell diameter is generally from 100 km to 1000 km. For such a large cell range, cell coverage is usually implemented in the NTN in a manner different from that of the terrestrial network. First, in the NTN, to prevent a free space loss, a signal is weighted by using a large-scale antenna array, and signal energy is concentrated in a small range, to form a signal similar to a light beam (referred to as an analog beam, beam for short), thereby ensuring transmission quality. Second, in the NTN, a cell is divided into a plurality of virtual subcells (with diameters of about 10 km to 20 km). Each virtual subcell corresponds to one beam. Because there are a large quantity (hundreds or thousands) of virtual subcells and a limited quantity of antennas on a base station side, it is difficult for the NTN to cover all the virtual subcells at the same time. Therefore, the base station performs region coverage through periodic beam sweeping. In a working mode of performing region coverage through periodic beam sweeping, at some moments, there is no beam, sent by the base station, pointing at a region in which a terminal device is located. In this case, the terminal device is in a coverage hole.

Scheduling-free/dynamic grant-free (grant free, GF) transmission is one of transmission solutions for reducing a transmission delay in the NTN in the future. Based on an existing scheduling-free transmission mechanism, except for the base station to indicate, through signaling reconfiguration, rescheduling, or the like, that a scheduling-free resource changes, a system or the terminal device considers that a scheduling-free resource of the UE is always valid by default. However, due to the coverage hole, it is learned, through calculation based on service duration of a single satellite, that a large quantity of scheduling-free resources are in an invalid state. If the terminal performs scheduling-free transmission in the coverage hole through the scheduling-free resource, the transmission fails, affecting an overall transmission delay.

In some known solutions, a time-related scheduling-free resource parameter is bound to an NTN beam sweeping period, sweeping time, and the like, and scheduling-free resources with different periods and duration are set for different beams, to avoid impact of the coverage hole on transmission efficiency.

However, because each beam has different service time, and each beam has a different scheduling-free resource parameter, each beam needs to be indicated through specific signaling, and signaling required for thousands of beams is extremely large. In addition, if such a solution is used, configurations of the scheduling-free resources may be sent to the terminal and fixed during a radio resource control (radio resource control, RRC) configuration considering a large quantity of configurations and high signaling overheads. Consequently, reconfiguring the scheduling-free resources based on downlink control information (downlink control information, DCI) causes a signaling storm. It can be learned that the existing solution is not ideal for resolving a scheduling-free transmission failure caused by an NTN coverage hole, and another solution is urgently needed.

## SUMMARY

This application provides a scheduling-free resource configuration method and a communication apparatus, to help avoid a transmission failure caused by scheduling-free transmission performed by a terminal device in an NTN coverage hole.

According to a first aspect, a scheduling-free resource configuration method is provided, and is applied to a first communication apparatus, for example, a terminal, a processor, a chip, a chip system, or a logical node or a logical module that can implement some or all functions of a terminal device. The following uses an example in which the first communication apparatus is the terminal device for description. The method includes:

receiving first information from a second communication apparatus;
determining a first indication sequence based on the first information;
determining, based on the first indication sequence, a first scheduling-free resource that is in scheduling-free resources of the first communication apparatus and that can be used for scheduling-free transmission; and
performing the scheduling-free transmission based on the first scheduling-free resource.

In the technical solution of this application, the second communication apparatus sends the first information to the first communication apparatus. The first information is used by the first communication apparatus to determine the first indication sequence, and the first indication sequence indicates the scheduling-free resource that is in the scheduling-free resources of the first communication apparatus and that can be used for the scheduling-free transmission. In other words, based on the scheduling-free resources configured by the second communication apparatus, the first communication apparatus may determine, based on the first indication sequence, the scheduling-free resource that is in the scheduling-free resources configured by the second communication apparatus and that can be used for the scheduling-free transmission (or data transmission, GF transmission, CG transmission, or the like). This helps avoid a transmission failure caused by scheduling-free transmission performed by the first communication apparatus in a coverage hole on the network side.

In addition, in comparison with binding a time-related scheduling-free resource parameter to an NTN beam sweeping solution and time to avoid impact of the coverage hole on transmission efficiency, the technical solution of this application helps reduce signaling overheads.

In addition, the scheduling-free resource configured by the network side based on the indication sequence is more flexibly reconfigured. This can better adapt to a time-varying characteristic of an NTN. The scheduling-free resource may be reconfigured based on an actual requirement, and utilization of the scheduling-free resource can be improved.

UE and a base station are used as an example. When learning of the scheduling-free resources configured by the network side, the UE may determine, based on an indication sequence configured by the network for the UE (or a subcell in which the UE is located), whether the scheduling-free resources configured by the network side are available, to ignore an unavailable scheduling-free resource, and perform scheduling-free transmission only on the available scheduling-free resources. This can avoid a transmission failure caused by the UE using an invalid scheduling-free resource to perform data transmission in the coverage hole. In addition, in this application, reconfiguring the scheduling-free resource based on the indication sequence is highly flexible, and fewer signaling overheads are caused. This helps properly allocate and adjust the scheduling-free resource, improve resource utilization efficiency, and better adapt to a network requirement.

With reference to the first aspect, in some implementations of the first aspect, the first information includes a mapping relationship between a plurality of indication sequences and a plurality of reference signal identifiers.

Determining the first indication sequence based on the first information includes:

obtaining an identifier of a first reference signal corresponding to a subcell in which the first communication apparatus is located; and
determining, from the plurality of indication sequences based on the identifier of the first reference signal and the mapping relationship, the first indication sequence corresponding to the identifier of the first reference signal.

Based on this implementation, the UE may determine, based on local information, an identifier of a first reference signal corresponding to the subcell in which the UE is located, and determine a first indication sequence of the UE based on a mapping relationship delivered by the base station. Generally, a mapping relationship is delivered by a network device to all UEs in a cell through multicast or broadcast. The UE determines, based on the local information, the first indication sequence of the subcell in which the UE is located, so that signaling overheads for delivering the indication sequence by the network device can be reduced. Especially for moving UE, when a subcell of the UE is handed over, the UE may hand over an indication sequence, to ensure continuity of the GF transmission.

With reference to the first aspect, in some implementations of the first aspect, the first information includes a mapping relationship between the plurality of indication sequences and a plurality of reference signals, and identification information of a first reference signal corresponding to a subcell in which the first communication apparatus is located.

Determining the first indication sequence based on the first information includes:
determining the first indication sequence from the plurality of indication sequences based on the identification information of the first reference signal and the mapping relationship.

Based on this implementation, for UE with low power consumption, the base station may determine identification information of a first reference signal (or beam) corresponding to a subcell in which the UE is located, and deliver the identification information and the mapping relationship to the UE. The UE determines a first indication sequence of the UE based on the identification information of the first reference signal delivered by the base station and the mapping relationship. This helps reduce power consumption of the UE.

According to a second aspect, a scheduling-free resource configuration method is provided, and is applied to a second communication apparatus, for example, a network device, a chip, a chip system, or a logical node or a logical module that can implement some or all functions of a network device. The following uses an example in which the second communication apparatus is a network device for description. The method includes:

determining a first indication sequence, where the first indication sequence indicates a first scheduling-free resource that is in scheduling-free resources of a first communication apparatus and that can be used for scheduling-free transmission; and
sending first information to the first communication apparatus, where the first information is used by the first communication apparatus to determine the first indication sequence.

In some implementations of the first aspect or the second aspect, the first indication sequence is determined based on a scheduling-free transmission requirement of the subcell in which the first communication apparatus is located or a decision of the second communication apparatus for the scheduling-free transmission.

Based on this implementation, a design of the indication sequence is very flexible. When determining an indication sequence corresponding to a subcell, the network side may correspondingly increase or decrease available scheduling-free resources of the subcell based on an increase or decrease in a scheduling-free transmission requirement of the subcell, or may adjust a quantity of available scheduling-free resources of the subcell based on the decision of the network side.

In some implementations of the first aspect or the second aspect, the first information includes one or more of the following:

the first indication sequence;
a length of the first indication sequence;
a generation parameter of the first indication sequence, where the generation parameter includes one or more of the following: a time domain start point of at least one first scheduling-free resource, duration of the at least one first scheduling-free resource, a quantity of first scheduling-free resources, and a derivation parameter of the time domain start point of the at least one first scheduling-free resource parameter;
identification information of the first indication sequence;
the mapping relationship between a plurality of indication sequences and a plurality of reference signal identifiers, and the identification information of the first reference signal corresponding to the subcell in which the first communication apparatus is located, where the plurality of indication sequences include the first indication sequence;
information about a mapping relationship between a plurality of indication sequences and a plurality of reference signal identifiers, where each of the plurality of indication sequences corresponds to one of the plurality of reference signal identifiers;
a plurality of indication sequences, where the plurality of indication sequences respectively correspond to a plurality of reference signal identifiers;
respective generation parameters of a plurality of indication sequences and identification information of a first reference signal corresponding to a subcell in which the terminal device is located, where the plurality of indication sequences respectively correspond to a plurality of reference signals, and the plurality of indication sequences include the first indication sequence; and
respective generation parameters of a plurality of indication sequences, where the plurality of indication sequences include the first indication sequence.

Based on this implementation, the network side may deliver different first information in different scenarios, to deliver the indication sequence. For example, when the base station is overloaded, the base station may select to deliver generation parameters of indication sequences to some UEs with strong computing capabilities, so that the UEs calculate the indication sequences and finally determine the indication sequences of subcells in which the UEs are located. Alternatively, for some UEs with low power consumption, the base station directly delivers, to the UEs, indexes of indication sequences (for example, first indication sequences) corresponding to the UEs to reduce computing power consumption of the UEs. For another example, in a manner like delivering the mapping relationship or delivering the generation parameter of the indication sequence by the base station, a data amount required for transmitting the indication sequence can be compressed in comparison with directly delivering the indication sequence. Therefore, these implementations can meet requirements in various different scenarios.

In some implementations of the first aspect or the second aspect, the first information includes the information about the mapping relationship between a plurality of indication sequences and a plurality of reference signal identifiers, and the information about the mapping relationship includes the mapping relationship or an index of the mapping relationship.

In this implementation, the information about the mapping relationship may be the mapping relationship between the reference signal identifiers and the indication sequences, or may be the index of the mapping relationship. It is assumed that the mapping relationship has been preconfigured and stored in the UE. In this case, the network device indicates the mapping relationship by delivering the index of the mapping relationship, so that signaling overheads of delivering the mapping relationship by the network device can be further reduced.

In some implementations of the first aspect or the second aspect, the first information further includes validation time information of the first indication sequence, and the validation time information indicates a validation moment at which the first scheduling-free resource determined based on the first indication sequence is applied to the scheduling-free transmission.

In this implementation, a case in which the network device reconfigures the scheduling-free resource is considered. For example, the network device temporarily reconfigures the scheduling-free resource based on an emergency, and the validation moment is delivered in advance. In this way, the UE parses and adjusts signaling used for the reconfiguration.

In some implementations of the first aspect or the second aspect, the first communication apparatus receives configuration information of the scheduling-free resource of the first communication apparatus from the second communication apparatus. The configuration information of the scheduling-free resource and the first information are carried in one piece of signaling or a plurality of pieces of signaling.

In some implementations of the first aspect or the second aspect, the first information is carried in the piece of signaling or the plurality of pieces of signaling.

In some implementations of the first aspect or the second aspect, the first information is sent through unicast, multicast, or broadcast.

In some implementations of the first aspect or the second aspect, the scheduling-free resource includes a resource in one of the following domains, or includes a joint resource in the following plurality of domains: a time domain, a frequency domain, a space domain, or a code domain.

According to a third aspect, this application provides a communication apparatus. In a design, the communication apparatus may include modules that one-to-one correspond to and that are configured to perform the method/operations/steps/actions in the first aspect or the second aspect. The module may be a hardware circuit, may be software, or may be implemented by a hardware circuit in combination with software. In a design, the communication apparatus may include a processing module and a communication module.

According to a fourth aspect, this application provides a communication apparatus. The communication apparatus includes a processor, configured to implement the method according to any one of the first aspect, the second aspect, or the implementations of the first aspect or the second aspect. The processor is coupled to a memory. The memory is configured to store instructions and data. When the processor executes the instructions stored in the memory, the method according to any one of the first aspect, the second aspect, or the implementations of the first aspect or the second aspect can be implemented.

Optionally, the communication apparatus may further include a memory. Optionally, the communication apparatus may further include a communication interface. The communication interface is used by the apparatus to communicate with another device. For example, the communication interface may be a transceiver, a hardware circuit, a bus, a module, a pin, or another type of communication interface.

In an example, the communication apparatus may be a network device, for example, an access network device, may be an apparatus, a module, a chip, or the like disposed in the network device, or may be an apparatus that can be used in matching with the network device.

In another example, the communication apparatus may be a terminal device, may be an apparatus, a module, a chip, or the like disposed in the terminal device, or may be an apparatus that can be used in matching with the terminal device.

According to a fifth aspect, this application provides a communication system, including a first communication apparatus and a second communication apparatus.

According to a sixth aspect, this application further provides a computer program. When the computer program is run on a computer, the computer is enabled to perform the method according to any one of the first aspect or the implementations of the first aspect, or perform the method according to any one of the second aspect or the implementations of the second aspect.

According to a seventh aspect, this application further provides a computer program product, including instructions. When the instructions are run on a computer, the computer is enabled to perform the method according to any one of the first aspect or the implementations of the first aspect, or perform the method according to any one of the second aspect or the implementations of the second aspect.

According to an eighth aspect, this application further provides a computer-readable storage medium. The computer-readable storage medium stores a computer program or instructions, and when the computer program or the instructions are run on a computer, the computer is enabled to perform the method according to any one of the first aspect or the implementations of the first aspect, or perform the method according to any one of the second aspect or the implementations of the second aspect.

According to a ninth aspect, this application further provides a chip. The chip is configured to: read a computer program stored in a memory, and perform the method according to any one of the first aspect or the implementations of the first aspect, or perform the method according to any one of the second aspect or the implementations of the second aspect. Alternatively, the chip includes a circuit configured to perform the method according to any one of the first aspect or the implementations of the first aspect, or perform the method according to any one of the second aspect or the implementations of the second aspect.

According to a tenth aspect, this application further provides a chip system. The chip system includes a processor, configured to support an apparatus to implement the method according to any one of the first aspect or the implementations of the first aspect, or perform the method according to any one of the second aspect or the implementations of the second aspect. In a possible design, the chip system further includes a memory, and the memory is configured to store a program and data that are necessary for the apparatus. The chip system may include a chip, or may include a chip and another discrete component.

For technical effect of the solutions according to the second aspect to the tenth aspect, refer to corresponding descriptions in the first aspect. Details are not described again.

**BRIEF DESCRIPTION OF DRAWINGS**

FIG. 1 is a diagram of a beam sweeping solution in a satellite network;
FIG. 2 is a diagram of a large quantity of scheduling-free resources invalid when scheduling-free transmission is applied to an NTN;
FIG. 3 is a diagram of a satellite communication system applicable to an embodiment of this application;
FIG. 4 is a diagram of applying a combination of a mask sequence and an NTN beam sweeping solution to scheduling-free transmission according to this application;
FIG. 5 is a schematic flowchart of configuring a scheduling-free resource according to this application;
FIG. 6 is a diagram of applying a technical solution according to this application to an NTN scheduling-free transmission scenario;
FIG. 7 is a diagram of applying mask sequences to scheduling-free resources;
FIG. 8 is a diagram of scheduling-free transmission and scheduling-free feedback signaling listening performed by UE based on a mask sequence;
FIG. 9 is a block diagram of a communication apparatus 1000 according to this application; and
FIG. 10 is a block diagram of a communication apparatus 1100 according to this application.

**DESCRIPTION OF EMBODIMENTS**

The following describes technical solutions of embodiments in this application with reference to accompanying drawings.

To facilitate understanding of the technical solutions in this application, related technologies in embodiments of this application are described.

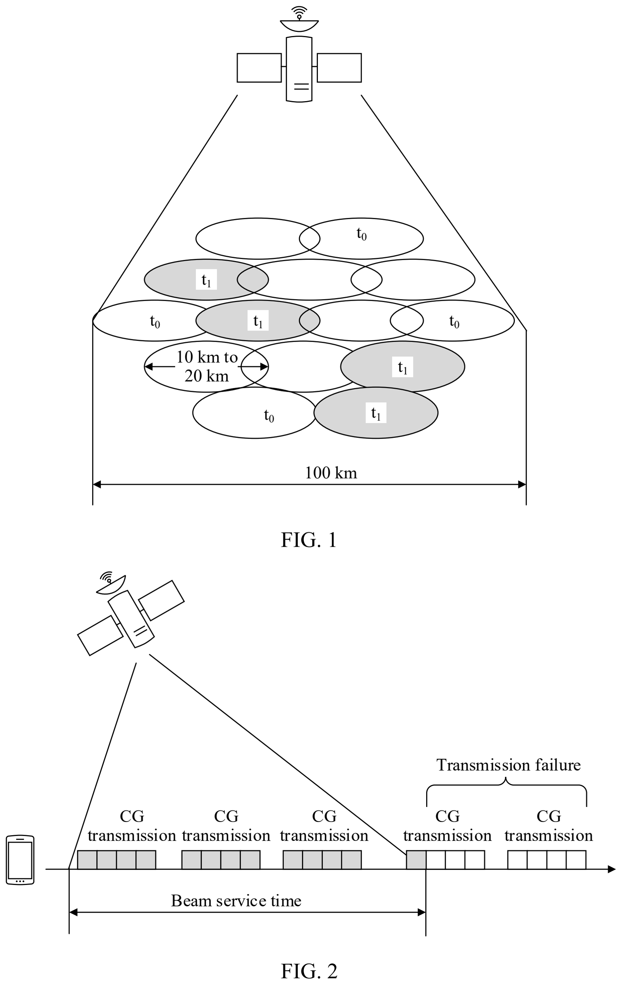

A non-terrestrial network is an important part of 5G and a future network, and is defined as a network or network segment that uses an airborne or spaceborne aircraft to board a relay node or base station of a transmission device. Compared with a conventional terrestrial network, the non-terrestrial network has a main characteristic that a base station is in the air or space. Compared with a terrestrial network, the NTN has a characteristic that a cell area is extremely large. A cell diameter is generally from 100 km to 1000 km. As shown in FIG. 1, for such a large cell range, the base station usually performs region coverage through periodic beam sweeping.

FIG. 1 is a diagram of an NTN beam sweeping solution. The base station constructs, at a time point (for example, $t_0$), a group of beams pointing to several virtual subcells, for example, subcells marked as $t_0$; and constructs, at a next time point (for example, $t_1$), another group of beams pointing to another group of different virtual subcells, for example, subcells marked as $t_1$. After all the virtual cells are covered within specific time, the base station restarts a new round of beam sweeping.

In the foregoing working mode of performing coverage through periodic sweeping, the subcell marked as $t_0$ has no directional beam sent by the base station at the moment $t_1$, that is, UE cannot receive a signal of the base station at this moment. Similarly, the base station cannot receive a signal sent by the UE (there is no beam gain, and a signal received by the base station is extremely weak and cannot be normally demodulated), that is, the UE is in a coverage hole. Because there are a large quantity of virtual cells, an NTN beam sweeping period is very long, and actual available communication time of each virtual cell is very short.

For the NTN with the characteristic, it is difficult for scheduling-based/dynamic grant-based service transmission to meet a delay requirement of a service. Scheduling-free/dynamic grant-free (Grant Free, GF) transmission is one of transmission solutions used by the NTN to reduce a transmission delay in the future. The dynamic grant-free transmission mainly includes two types. One type is uplink data transmission completed in a random access process, for example, two-step random access (for example, 2-step RA) introduced in 5G. The other type is direct data transmission, for example, semi-persistent scheduling (semi-persistent scheduling, SPS) in LTE, transmission based on a preconfigured uplink resource (preconfigured uplink resource, PUR), and configured grant (configured grant, CG) transmission in 5G. A common characteristic of the two types of GF transmission is that before uplink transmission, a terminal does not need to obtain, by listening to a dynamic grant of the base station, a time-frequency resource and a transmission parameter that are used for sending data, but sends the data to the base station based on a preconfigured time-frequency resource and a preconfigured transmission parameter. The time-frequency resource and the transmission parameter used for data transmission are usually configured by the base station through higher layer signaling like system information (system information, SI) or terminal-specific (UE-specific) RRC signaling. A difference between the two types of GF transmission lies in that, in the 2-step RA, the terminal further needs to send a random access preamble to the base station when sending the data, that is, the data of the terminal and the random access preamble are in a same uplink message. A function of the random access preamble is used to perform uplink synchronization between the terminal and the base station. In the direct data transmission, the terminal does not need to send the random access preamble to the base station. Therefore, the direct transmission is more applicable to a case in which the terminal and the base station have completed uplink synchronization.

In the GF transmission, signaling overheads and a delay caused by the dynamic grant can be ignored, and transmission efficiency is improved. However, a problem may occur when the GF transmission is directly applied to the NTN. FIG. 2 is a diagram of a large quantity of scheduling-free resources invalid when scheduling-free transmission is applied to an NTN. Because in an existing scheduling-free transmission mechanism, except for a base station to indicate, based on signaling through signaling reconfiguration, rescheduling, or the like, that a scheduling-free resource changes, a system or UE considers that a scheduling-free resource of the UE is always valid by default. However, for an NTN in which time division coverage is performed through beam sweeping, a base station does not always serve UE. Consequently, transmission in non-service time of the base station fails, and an overall transmission delay is affected. Calculation is performed based on service time of a single beam, and a large quantity of scheduling-free resources are in an invalid state. This is unfavorable to scheduling-free transmission.

In the existing scheduling-free mechanism, a period, duration, and the like of the scheduling-free resource may be defined through the signaling. Therefore, it is proposed in some solutions that, when the GF transmission is applied to the NTN, a time-related parameter of the scheduling-free resource may be bound to an NTN beam sweeping period and time, and scheduling-free resources with different periods and duration are set for different beams, to avoid impact of the coverage hole on the transmission efficiency. However, signaling overheads in this solution are extremely high. In addition, this solution is not time-varying enough.

Therefore, this application provides a scheduling-free resource configuration method, to help resolve a problem that scheduling-free transmission fails due to NTN beam sweeping. In addition, the signaling overheads can be reduced, and scheduling-free resource configuration is more flexible, so that a time-varying characteristic of the NTN can be better adapted to.

The technical solutions of this application may be applied to various communication systems, including but not limited to a satellite communication system, a high altitude platform station (high altitude platform station, HAPS) communication system, an NT system like an unmanned aerial vehicle, an integrated communication and navigation (integrated communication and navigation, ICAN) system, a global navigation satellite system (global navigation satellite system, GNSS), an ultra-dense low earth orbit satellite communication system, a system integrating satellite communication and a cellular system, and the like. The cellular network system may include a long term evolution (long term evolution, LTE) system, a 5th generation (5th generation, 5G) communication system, a new radio (new radio, NR) system, a 6th generation (6th generation, 6G) communication system, another future evolved communication system, or the like.

The following describes the technical solutions of this application by using the satellite communication system as an example.

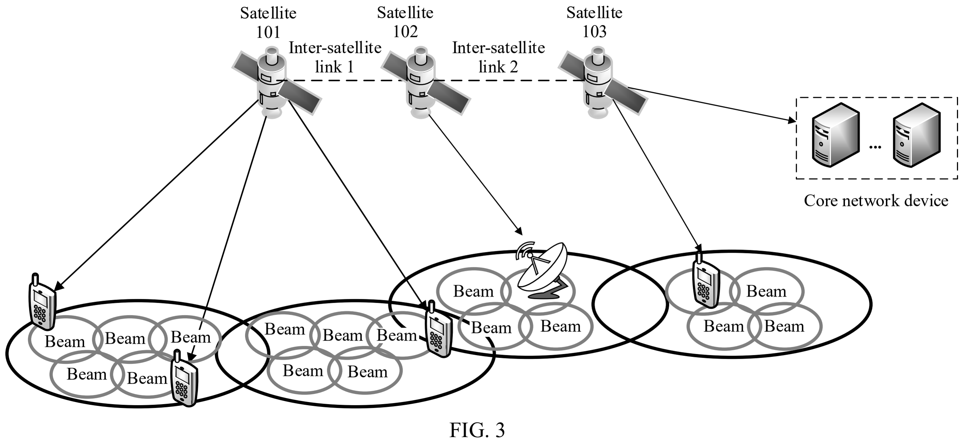

FIG. 3 is a diagram of a satellite communication system applicable to an embodiment of this application. The satellite communication system includes a satellite 101, a satellite 102, a satellite 103, and a terminal device. Each satellite may provide services, for example, a communication service, a navigation service, and a positioning service, for the terminal device through a plurality of beams. The satellite 103 is connected to a ground station device. The satellite uses a plurality of beams to cover a service region, and different beams may be used to perform communication in one or more manners of time division, frequency division, and space division. The satellite performs wireless communication with the terminal device by using a broadcast communication signal, a navigation signal, and the like. The satellite can wirelessly communicate with the ground station device. The ground station device may be a device in a core network (core network, CN) in an existing mobile communication architecture, a device in a core network in a future mobile communication architecture, a device configured to connect a satellite and a core network, a relay device used for satellite communication, or the like.

In addition, the satellite communication system may include a transparent transmission satellite architecture and a non-transparent transmission satellite architecture. Transparent transmission is also referred to as bent-pipe forwarding transmission, only frequency conversion and signal amplification are performed on a signal on a satellite, and the satellite is transparent to the signal, as if the satellite does not exist. Non-transparent transmission is also referred to as regenerative (on-satellite access/processing) transmission, that is, a satellite has some or all of functions of a base station. For example, the satellite 101 and the satellite 102 in FIG. 3 are of non-transparent satellite architectures, and the satellite 103 is of a transparent satellite architecture. In addition, the satellite may work in a quasi earth-fixed mode or a satellite-fixed mode.

The terminal device in embodiments of this application includes various communication kits (communication kit, where the kit may include, for example, an antenna, a power supply template, a cable, and a Wi-Fi module) having wireless communication functions, a handheld device, a vehicle-mounted device, or another processing device connected to a wireless modem, which may specifically be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. Alternatively, the terminal device may be a communication module having a satellite communication function, a satellite phone or a component thereof, a very small aperture terminal (very small aperture terminal, VSAT), a wireless modem, a machine type communication device, or another processing device connected to a wireless modem. Alternatively, the terminal device may be a virtual reality (virtual reality, VR) terminal device, an augmented reality (augmented reality, AR) terminal device, a wireless terminal in industrial control (industrial control), a terminal in self-driving (self-driving), a terminal in telemedicine (remote medical), a terminal in a smart grid (smart grid), a terminal in transportation safety (transportation safety), a terminal in a smart city (smart city), a terminal in a smart home (smart home), a terminal device in a future communication network, or the like. Certainly, the terminal device in this application may alternatively be a chip, a modem, a system on a chip (system on a chip, SoC), or a communication platform that may include a radio frequency RF part or the like mainly responsible for a related communication function in the device.

A network device may further include but is not limited to: an evolved NodeB (evolved NodeB, eNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the network device may be a gNB, a TRP, or a TP in a 5G system, or one or a group of antenna panels (including a plurality of antenna panels) of a base station in a 5G system. In addition, the network device may alternatively be a network node that forms a gNB or a TP, for example, a BBU or a distributed unit (distributed unit, DU). Alternatively, the network device may be a device-to-device (device-to-device, D2D) communication system, a machine-to-machine (machine-to-machine, M2M) communication system, an internet of things (Internet of Things, IoT) communication system, an internet of vehicles communication system, or a device that undertakes a network side function in another communication system.

The satellite mentioned in embodiments of this application may be an LEO satellite, a medium earth orbit (medium earth orbit, MEO) satellite, a geosynchronous orbit (geosynchronous orbit, GEO) satellite, or the like.

Optionally, the satellite mentioned in embodiments of this application may be a satellite base station, or may include an orbital receiver or a repeater configured to relay information, or may be a network side device mounted on a satellite, or the like.

In the technical solutions of this application, a concept of a mask (mask) is first introduced to a communication resource.

A mask is an identifier that is defined on a communication resource and that enables transmission of the communication resource. For example, when mask=1, the communication resource can be used for data transmission; or when mask=0, the communication resource cannot be used for data transmission. When a large quantity of communication resources are indicated by using masks, a mask sequence (or referred to as an indication sequence in this specification) is formed. Each value in the mask sequence indicates whether a corresponding communication resource can be used for data transmission.

Optionally, the communication resource includes but is not limited to a time domain resource, a frequency domain resource, a time-frequency resource, a code domain resource, and a space domain resource, or a combined resource of resources in the at least two domains. The following uses the time-frequency resource as an example to describe the technical solutions provided in this application.

For example, the mask sequence may be an enable switch indication of a plurality of different frequency domain resources at the same time, or may be an enable switch indication of a same frequency domain resource at different time, or may be an enable switch indication of different frequency domain resources at different time.

In this application, the mask sequence is flexibly designed, for example, may be determined based on a scheduling-free transmission requirement of a geographical region in which UE is located, or may be determined based on a decision of a network device for scheduling-free transmission.

After a concept of the mask is introduced to the communication resource, the concept of the mask may be applied to an NTN, and a mask sequence is introduced for a scheduling-free resource in the NTN, to enable intermittent transmission of the scheduling-free resource. In other words, the mask sequence is introduced to the scheduling-free resource of the NTN, to indicate whether the scheduling-free resource configured by the network side can be finally used for the scheduling-free transmission.

Further, the mask sequence in the NTN may be related to a beam sweeping solution of the NTN. Specifically, when the network side serves a virtual cell, all scheduling-free resources of the virtual cell within service time can be used for the scheduling-free transmission, that is, a mask sequence corresponding to the scheduling-free resources of the virtual cell is set to 1; and when the network side no longer serves the virtual cell, the scheduling-free resources of the virtual cell within non-service time cannot be used for the scheduling-free transmission or are disabled, that is, the mask sequence corresponding to the scheduling-free resources of the virtual cell is set to 0.

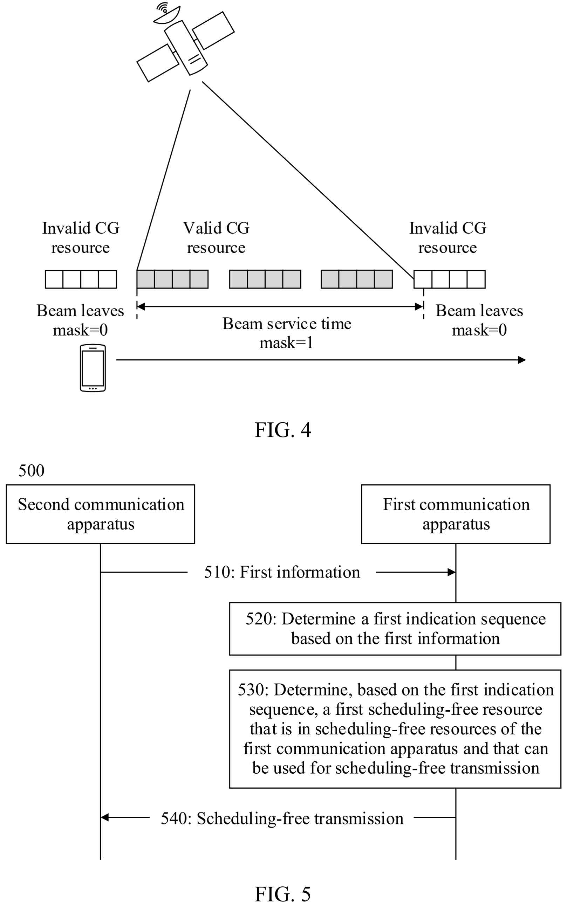

It can be learned that when the mask sequence is related to the beam sweeping solution of the NTN, effect shown in FIG. 4 is achieved.

FIG. 4 is a diagram of applying a combination of a mask sequence and an NTN beam sweeping solution to scheduling-free transmission according to this application. Within service time of a beam, masks corresponding to all scheduling-free resources of a subcell served by the beam are set to 1, and the scheduling-free resources can be used for the scheduling-free transmission; and when the beam leaves the subcell, all the scheduling-free resources of the subcell are invalid, that is, mask=0, and the scheduling-free resources cannot be used for the scheduling-free transmission.

It should be understood that a configuration of a mask corresponding to a scheduling-free resource is irrelevant to the specific scheduling-free resource, and is configured by a network device. In other words, masks used by a same scheduling-free resource in different virtual cells (or virtual cell groups) are different, and masks used by different scheduling-free resources in a same virtual cell (or virtual cell groups) are the same.

Based on the foregoing description, it can be learned that a configuration of the mask sequence is independent of the scheduling-free resource. Therefore, in the technical solution of this application, the network side may indicate, through configuration signaling of the scheduling-free resource and configuration signaling of the mask sequence, that is, two sets of configuration signaling, a scheduling-free resource that is in scheduling-free resource on a UE side and that can be finally used for the scheduling-free transmission. From a perspective of the UE side, scheduling-free resources configured by the network side may be learned based on the scheduling-free resource configuration signaling. Then, the scheduling-free resource that can be used for the scheduling-free transmission is determined from the scheduling-free resources configured by the network side based on the configuration signaling of the mask sequence. In other words, the scheduling-free resources configured by the network side can be partially used for the scheduling-free transmission. Specifically, this needs to be determined based on the mask sequence.

FIG. 5 is a schematic flowchart of configuring a scheduling-free resource according to this application. Optionally, a method 500 may be performed by a first communication apparatus and a second communication apparatus, the first communication apparatus may be performed by a terminal device, a chip, or a chip system, and the second communication apparatus may be performed by a network device, a chip, or a chip system. The following provides descriptions by using an example in which the first communication apparatus is the terminal device and the second communication apparatus is the network device.

510: The terminal device receives first information from the network device.

The first information may be sent by the network device through unicast, multicast, or broadcast. The network device may select a corresponding sending manner based on information specifically included in the first information. The following embodiment provides an example for description.

520: The terminal device determines a first indication sequence based on the first information.

Optionally, the first indication sequence is a mask sequence, and may be specifically a mask sequence corresponding to a subcell in which UE is located. The first mask sequence is configured by the network device based on some factors, including but not limited to a scheduling-free transmission requirement of the subcell in which the UE is located, a decision of scheduling-free transmission on the network side, and the like.

530: The terminal device provides the first indication sequence, and determines first scheduling-free resources that are in scheduling-free resources of the terminal device and that can be used for the scheduling-free transmission.

The first scheduling-free resources include a scheduling-free resource that is in the scheduling-free resources configured by the network device for the terminal device and that can be used for the scheduling-free transmission. Based on a concept of a mask proposed in this application, the first scheduling-free resource may alternatively be a scheduling-free resource with mask=1. In other words, the first indication sequence indicates the scheduling-free resource that can be used for the scheduling-free transmission in the scheduling-free resources of the terminal device, or the first indication sequence indicates a scheduling-free resource that cannot be used for the scheduling-free transmission in the scheduling-free resources of the terminal device, or the first indication sequence indicates the scheduling-free resource that can be used for the scheduling-free transmission and a scheduling-free resource that cannot be used for the scheduling-free transmission in the scheduling-free resources of the terminal device.

540: The terminal device performs the scheduling-free transmission based on the first scheduling-free resource.

In the technical solution of this application, the network device sends the first information to the terminal device. The first information is used by the terminal device to determine the first indication sequence, and the first indication sequence indicates the scheduling-free resource that is in the scheduling-free resources of the terminal device and that can be used for the scheduling-free transmission. In other words, based on the scheduling-free resources configured by the network device, the terminal device may determine, based on the first indication sequence, the scheduling-free resource that is in the scheduling-free resources configured by the network device and that can be used for the scheduling-free transmission (or data transmission, GF transmission, CG transmission, or the like). This helps avoid a transmission failure caused by scheduling-free transmission performed by the terminal device in a coverage hole on the network side. In addition, in comparison with binding a time-related scheduling-free resource parameter to an NTN beam sweeping solution and time to avoid impact of the coverage hole on transmission efficiency, the technical solution of this application helps reduce signaling overheads. In addition, the scheduling-free resource configured by the network side based on the indication sequence is more flexibly reconfigured. This does not cause a signaling storm, and can better adapt to a time-varying characteristic of an NTN. The scheduling-free resource may be reconfigured based on an actual requirement, and utilization of the scheduling-free resource can be improved.

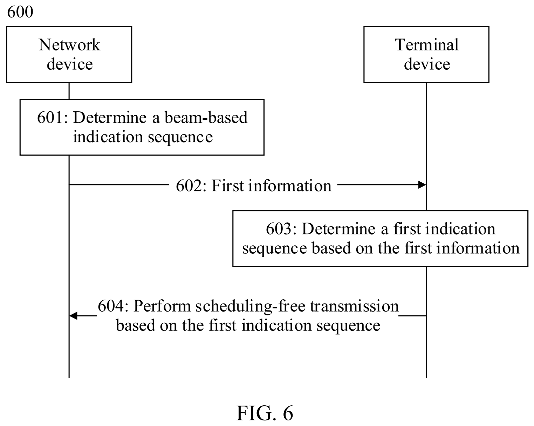

When the technical solution provided in this application is applied to an NTN beam sweeping scenario, a design of the mask sequence and a specific implementation of indicating, by the network device, the mask sequence to the terminal device are described in FIG. 6.

FIG. 6 is a diagram of applying a technical solution according to this application to an NTN scheduling-free transmission scenario.

601: A network device determines a beam-based mask sequence.

Specifically, the network device separately determines corresponding mask sequences for different beams. For example, the network device determines a solution $i$ of a mask sequence corresponding to a beam $i$. In this way, when the beam $i$ serves a region, a scheduling-free resource in the region can be used for scheduling-free transmission. Otherwise, the scheduling-free resource in the region is invalid, and UE in the region cannot perform the scheduling-free transmission based on the scheduling-free resource.

In an example, the mask sequence may be a bit sequence whose bit length is N, for example, $(b_1(i),...,b_N(i))$.

In an implementation, the mask sequence may be applied to N different time units of the beam $i$. When $b_j(i) = 1, 1 \leq j \leq N$, and there is a scheduling-free resource in a $j^{th}$ time unit, the scheduling-free resource in the $j^{th}$ time unit is valid, and can be used for the scheduling-free transmission. When $b_j(i) = 0, 1 \leq j \leq N$, and there is a scheduling-free resource in a $j^{th}$ time unit, the scheduling-free resource in the $j^{th}$ time unit is invalid, and cannot be used for the scheduling-free transmission. When there is no scheduling-free resource in the $j^{th}$ time unit, a value of $b_j(i)$ is invalid for the scheduling-free resource.

In another implementation, the mask sequence may be applied to scheduling-free resources of N time units of the beam $i$. When $b_j(i) = 1, 1 \leq j \leq N$, it indicates that a scheduling-free resource in a $j^{th}$ time unit is valid, and the scheduling-free resource can be used for the scheduling-free transmission. When $b_j(i) = 0, 1 \leq j \leq N$, it indicates that a scheduling-free resource in a $j^{th}$ time unit is invalid, and the scheduling-free resource cannot be used for the scheduling-free transmission.

The mask sequence may be generated in a plurality of manners. The following provides some examples.

(1) Predefinition

The network device and the UE predefine a plurality of mask sequences, and store the plurality of mask sequences on the UE side.

For example, N=8, and pre-stored mask sequences may be:

sequence 1: 10000000;
sequence 2: 01000000;
sequence 3: 00100000; and
...

(2) Root sequence and shift

The network device delivers the root sequence to all UEs in a cell through predefinition or signaling broadcast. Different shift information is broadcast to UEs under different beams, to generate respective mask sequences.

For example, N=8. It is assumed that the root sequence delivered by the network device through predefinition or signaling broadcast is 10000000, and the network device periodically scans a cell through eight beams. A base station serves a beam 1 at a moment 0, and serves a beam 2 at a moment 1. The rest may be deduced by analogy. In this case, a time shift of a mask sequence of the beam 1 is 0, and a time shift of a mask sequence of the beam 2 is 1. The rest may be deduced by analogy. Finally, mask sequences corresponding to the eight beams are obtained as follows:

beam 1: 10000000;
beam 2: 01000000;
beam 3: 00100000;
...
beam 8: 00000001.

(3) Generation based on a mapping relationship

It is assumed that in the mask sequence, a location of mask=1 is determined according to the following formula:

$$(a_1(i),\ldots,a_1(i)+\Delta n_i-1,a_2(i),\ldots,a_2(i)+\Delta n_i-1,\ldots,a_k(i),\ldots,a_k(i)+\Delta n_i-1) \quad (1)$$

$a_l(i)$ indicates a start point of an $l^{th}$ time of mask=1, and $\Delta n_i$ indicates a quantity of pieces that mask=1 lasts. It is assumed that the scheduling-free resource that can be used for the transmission is referred to as a first scheduling-free resource. In this case, the formula (1) includes these parameters: a length of the first indication sequence, a time domain start point of at least one first scheduling-free resource, duration of the at least one first scheduling-free resource, and a quantity of first scheduling-free resources (that is, $k$). Duration of any first scheduling-free resource may be at a granularity of a time unit. For example, the time unit may be a slot. In this case, the duration of the first scheduling-free resource is a quantity of slots in which the first scheduling-free resource lasts. Another time granularity may be used. This is not limited in this application.

A location set may be determined according to the foregoing formula (1), and the location set is defined as $\varepsilon_i$. When $j$ belongs to $\varepsilon_i$, mask=1. Otherwise, mask=0, that is, may be represented according to the following formula (2):

$$b_j(i) = \begin{cases} 1 & j \in \mathcal{E}_i, \\ 0 & Others \end{cases}$$

In this implementation, if the mapping relationship is pre-agreed on, the network device delivers generation parameters, for example, $(a_1(i), a_2(i) \ldots a_k(i))$ and $\Delta n_i$. The UE determines $\varepsilon_i$ based on the generation parameters delivered by the network device and the mapping relationship, to determine the corresponding mask sequence $b_j(i)$. For example, if $(a_1(i), a_2(i) \ldots a_k(i))$ are associated, for example, $a_l(i) = a_1(i) + c_i \times (l - 1)$, the parameters delivered by the network device may be further compressed into $c_i$, $k$ and $\Delta t_i$. $c_i$ is a derivation parameter of the time domain start point of the first scheduling-free resource, and $k$ is the quantity of first scheduling-free resources corresponding to the first indication sequence. For example, if the first indication sequence is applied to the N time units, $k$ indicates a quantity of available time units in the N time units, that is, the $k$ time units can be used for the scheduling-free transmission.

In the foregoing example, when the mask sequence is applied to time, a granularity of the time unit may be a slot or a larger time interval. Time to which the mask sequence is applied may be of an absolute value, or may be of a relative value relative to reference time.

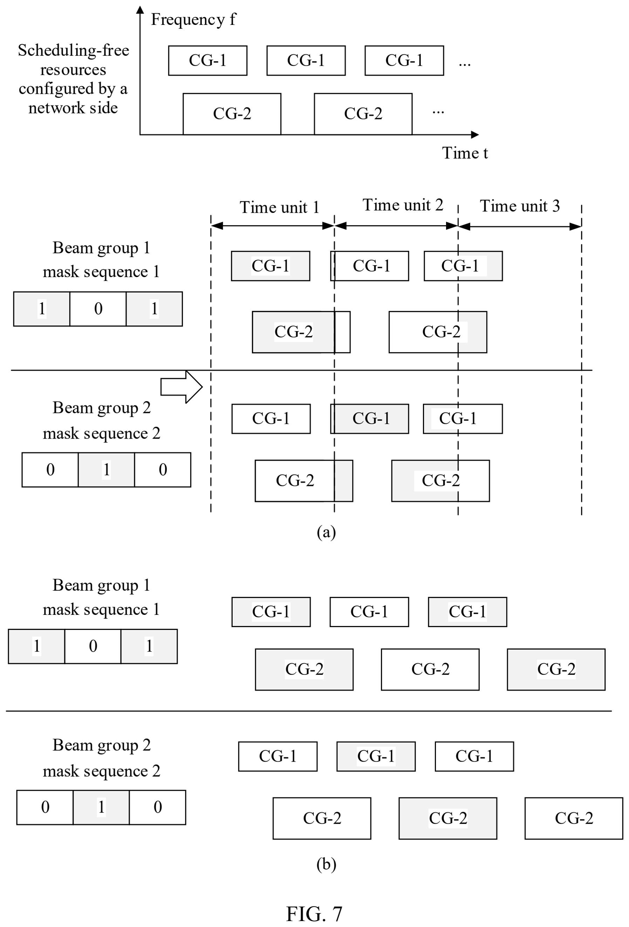

When the mask sequence is applied to the scheduling-free resource, a granularity at which the mask sequence is applied may be a single time of GF transmission, or may be a group of GF resources including K times of GF transmission. The following provides an example with reference to FIG. 7.

FIG. 7 is a diagram of applying mask sequences to scheduling-free resources. As shown in FIG. 7, for scheduling-free resources CG 1 and CG 2 configured by the network side, when different mask sequences are separately combined with the CG 1 and the CG 2, CG resources that can be used for the scheduling-free transmission are different.

In an example, the network side configures a mask sequence 1 of a beam group 1 to 101, and configures a mask sequence 2 of a beam group 2 to 010. It is assumed that both the mask sequence 1 and the mask sequence 2 are applied to N time units. In this case, N=3, and the N time units are denoted as a time unit 1 to a time unit 3. As described above, when a value of a mask corresponding to a time unit in the mask sequence is 1, and there is a scheduling-free resource in the time unit, the scheduling-free resource in the time unit is valid, and can be used for the scheduling-free transmission. When a value of a mask corresponding to a time unit in the mask sequence is 0, and there is a scheduling-free resource in the time unit, the scheduling-free resource in the time unit is invalid, and cannot be used for the scheduling-free transmission. Therefore, the mask sequence 1 is applied to the three time units, and values of masks of the time unit 1 and the time unit 3 are 1. Therefore, scheduling-free resources in the time unit 1 and the time unit 3 are available. A value of a mask of the time unit 2 is 0, and a scheduling-free resource in the time unit 2 is unavailable. The mask sequence 2 is applied to the three time units, and the value of the mask of the time unit 2 is 1. Therefore, the scheduling-free resource in the time unit 2 is available, and the scheduling-free resources in the time unit 1 and the time unit 3 are unavailable. Therefore, the UE determines, based on the mask sequence 1 and the mask sequence 2, scheduling-free resources that are in the scheduling-free resources (for example, the CG 1 and the CG 2) configured by the network side and that can be used for the scheduling-free transmission, as shown in parts filled in gray in (a) of FIG. 7.

In another example, both the mask sequence 1 and the mask sequence 2 are applied to N scheduling-free resources. For example, the mask sequence 1 is applied to three scheduling-free resources, and the mask sequence 1 is set to 101. Therefore, every three scheduling-free resources are a group, a $1^{st}$ scheduling-free resource and a $3^{rd}$ scheduling-free resource in the group are available, and a $2^{nd}$ scheduling-free resource is unavailable. The UE may determine, based on the mask sequence 1, whether each CG 1/CG 2 that periodically appears can be used for the scheduling-free transmission. The mask sequence 2 is similar, and the mask sequence 2 is set to 101. Every three scheduling-free resources are a group, a 1st scheduling-free resource and a 3rd scheduling-free resource in the group are unavailable, and a 2nd scheduling-free resource is available. The UE may determine, based on the mask sequence 2, whether each CG 1/CG 2 that periodically appears can be used for the scheduling-free transmission. For this example, refer to (b) in FIG. 7.

In an embodiment related to a mask sequence and an NTN beam sweeping solution, the mask sequence is directly related to a beam, and one beam corresponds to one mask sequence. A mapping relationship between beams and mask sequences may be shown in Table 1.

Table 1

| Beam identifier (beam ID) | mask sequence |
|---|---|
| 1 | $b_1(1), b_2(1)...$ |
| 2 | $b_1(2), b_2(2)...$ |
| ... | ... |

Because a network device may serve a plurality of virtual cells at the same time, mask sequences of a plurality of beams that serve the plurality of virtual cells are the same, that is, mask sequences of a plurality of beams that have same service time are the same. For example, a mapping relationship between beams and mask sequences may be shown in Table 2.

Table 2

| Beam identifier (beam ID) | mask sequence |
|---|---|
| 1, 3, and 7 | $b_1(1), b_2(1)...$ |
| 2, 5, and 8 | $b_1(2), b_2(2)...$ |
| ... | ... |

As shown in Table 2, the beam 1, the beam 3, and the beam 7 correspond to the same mask sequence, and the beam 2, the beam 5, and the beam 8 correspond to the same mask sequence.

Optionally, the beam may be represented based on various signal-related identifiers in a communication protocol. In this case, the mapping relationships shown in Table 1 and Table 2 may be replaced with mapping relationships between signal-related identifiers and mask sequences.

For example, in an NR system, beams may be represented based on the following identifiers:

a resource index of a channel state information reference signal (channel state information reference signal, CSI-RS), an index of a synchronous signal/physical broadcast channel block (synchronous signal/physical broadcast channel block, SSB), a resource index of a sounding reference signal (sounding reference signal, SRS), and a resource index of a tracking reference signal (tracking reference signal, TRS).

In addition, generally, one beam corresponds to one DMRS port, one transmission configuration indicator (transmission configuration indicator, TCI), or one sounding reference signal resource indicator (SRS resource indicator, SRI) (used for uplink data transmission). Therefore, different beams may also be represented based on different DMRS ports, TCIs, or SRIs. The SSB is used as an example. It is assumed that beam information is bound to the SSB, a mapping relationship between beams and mask sequences may be represented based on a mapping relationship between SSBs and mask sequences, as shown in Table 3.

Table 3

| SSB ID | mask sequence |
|---|---|
| SSB 1 | $b_1(1), b_2(1)...$ |
| SSB 2 | $b_1(2), b_2(2)...$ |
| ... | ... |

602: The network device sends first information, where the first information is used by the UE to determine a first mask sequence (that is, the first indication sequence).

Optionally, based on a plurality of generation manners of the mask sequence, in different generation manners, the network device may deliver different information to the UE, and the UE may determine, based on the information delivered by the network device, a mask sequence, of a subcell in which the UE is located, referred to as the first indication sequence or the first mask sequence in this specification.

(1) The network device delivers the first mask sequence or an index (or referred to as identification information) of the first mask sequence.

In some scenarios, for power saving of the UE or for another reason, the network device may determine, based on information reported by the UE, the first mask sequence corresponding to the UE. Optionally, the reported information of the UE includes but is not limited to beam information (or information about a signal bound to the beam information), location information, measurement information, and the like. In this way, the network device can infer, based on the reported information, an identifier of a beam (referred to as a beam identifier for short below) on which the UE is located.

For example, when the UE reports the beam information (or the information about the signal bound to the beam information), the network device determines, based on the beam information or the information about the signal bound to the beam, and a mapping relationship between the beam identifier and a mask sequence (or a mapping relationship between a signal identifier and the mask sequence), the first mask sequence corresponding to the UE.

When the UE reports location information, the network device may delimit, based on the location information, a geographical region in which the UE is located, determine, based on a mapping relationship between the geographical region and a beam, a beam identifier corresponding to the geographical region in which the UE is located, and determine the first mask sequence based on the beam identifier. Optionally, the region in which the UE is located may be the subcell in which the UE is located. Optionally, the mapping relationship between the geographic region and the beam may alternatively be a mapping relationship between the subcell and the beam.

When the UE reports measurement information (for example, an optimal beam measurement result of the SSB), the network device compares the measurement information with a previous beam measurement result of the UE, and modifies TCI-state information of reference signal information (like the TRS, the CSI-RS, and a DMRS) that is QCL co-located with an SSB index, mainly including modifying a beam identifier of a scheduling-free resource corresponding to the TCI-state information, and determining a new mask sequence based on a new beam identifier.

After determining the first mask sequence, the network device may directly send the first mask sequence to the UE through signaling.

Alternatively, if the UE has pre-stored a plurality of mask sequences and respective indexes of the mask sequences, the network device may alternatively deliver the index of the first mask sequence to the UE.

(2) The network device delivers a generation parameter of the mask sequence to the UE (or a UE group).

For example, when the mask sequence may be generated based on an agreed generation relationship, the network device may deliver the generation parameter of the mask sequence to the UE. For example, if the mask sequence may be determined based on the root sequence and shift information, and the root sequence has been pre-stored in the UE, the generation relationship is a time offset, and the generation parameter is a specific time shift value. For another example, the mask sequence may be generated based on the foregoing mapping relationship, and the generation parameter may include one or more of the following:

the length of the first indication sequence, the time domain start point (for example, $a_1(i)$, $a_2(i)$ ... $a_k(i)$ in the foregoing embodiment) of the at least one first scheduling-free resource, the duration of the at least one first scheduling-free resource (for example, $\Delta n_i$), the quantity of first scheduling-free resources (for example, the parameter $k$ in the foregoing formula (1)), the derivation parameter (for example, $c_i$) of the time domain start point of the at least one first scheduling-free resource, an indication manner of the indication sequence, and the like. The indication manner of the indication sequence may include the indication sequence applying to the N time units or the N scheduling-free resources, where N is a length of the indication sequence, and N is a positive integer.

(3) The network device delivers the plurality of mask sequences and index information of a beam (or a signal bound to the beam) corresponding to the first mask sequence.

For example, the network device may first deliver the mask sequences corresponding to different beams. Then, a corresponding beam (or signal) index value is determined and delivered based on the information reported by the UE.

(4) The network device may deliver generation parameters of the plurality of mask sequences and the index information of the beam (or the signal bound to the beam) corresponding to the first mask sequence.

For example, when the mask sequence may be generated based on the agreed generation relationship, the network device delivers the generation parameters corresponding to the plurality of mask sequences to the UE. Then, the corresponding beam (or signal) index value is determined and delivered based on the information reported by the UE.

(5) The network device may select to deliver the plurality of mask sequences to the UE.

For example, the network device may alternatively select to deliver the mask sequences corresponding to different beams (or signals bound to the beams) to the UE, that is, deliver the plurality of mask sequences. The UE determines the corresponding first mask sequence based on local information. For example, the UE may determine, based on the local information, beam information corresponding to the subcell in which the UE is located, and obtain a mask sequence (that is, the first mask sequence) corresponding to the beam information.

(6) The network device may select to deliver the generation parameters of the plurality of mask sequences to the UE.

When the mask sequence may be generated based on the agreed generation relationship, the network device delivers the generation parameters corresponding to the plurality of mask sequences to the UE. After locally obtaining the plurality of mask sequences through calculation based on the generation relationship and the generation parameters, the UE determines the corresponding mask sequence (that is, the first mask sequence) based on the local information.

(7) The network device delivers a mapping relationship between the plurality of mask sequences and a plurality of reference signal identifiers and identification information of a first reference signal corresponding to the subcell in which the UE is located. The plurality of mask sequences include the first mask sequence.

The UE determines, based on the identification information of the first reference signal corresponding to the subcell in which the UE is located and the mapping relationship, the first mask sequence corresponding to the identification information of the first reference signal.

(8) The network device delivers information about the mapping relationship between the plurality of mask sequences and the plurality of reference signal identifiers. Optionally, the information about the mapping relationship may be the mapping relationship or an index of the mapping relationship.

For example, the network device delivers the mapping relationship, and the UE determines the first reference signal identifier corresponding to the subcell in which the UE is located, and determines the first mask sequence based on the mapping relationship. Alternatively, the mapping relationship between the plurality of mask sequences and the plurality of reference signal identifiers is preconfigured, predefined in a protocol, or pre-agreed on. In this implementation, the network device may deliver the index of the first mask sequence corresponding to the UE, and the UE may determine the first mask sequence based on the index of the first mask sequence. In this implementation, signaling overheads of delivering the mapping relationship by the network device can be reduced.

Regardless of the foregoing delivery form, signaling carrying the first information and signaling for configuring the scheduling-free resource may be delivered together, or may be delivered independently.

When the network device delivers the signaling carrying the first information, the signaling may be delivered through RRC signaling, or may be delivered through DCI signaling.

A form for delivering the first information by the network device may be the signaling broadcast to all the UEs, the signaling sent to a specific group of UEs (for example, a UE group under a same beam) through multicast, or the signaling sent to specific UE through unicast. This is not limited.

603: The UE determines the first mask sequence based on the first information.

Specifically, the UE parses the signaling carrying the first information to obtain the first mask sequence corresponding to the UE.

Based on a plurality of specific implementations of delivering the first information by the network device in step 602, the UE also determines the first mask sequence in different manners.

For example, if the first information delivered by the network device is the first mask sequence (or the network device directly delivers the first mask sequence), after determining that the signaling carrying the first information is sent to the UE, the UE uses the first mask sequence as a mask sequence corresponding to a GF resource of the UE.

For another example, if the first information delivered by the network device is a generation parameter corresponding to the first mask sequence, after determining that the signaling carrying the first information is sent to the UE, the UE generates, based on the agreed generation relationship and the received generation parameter, a corresponding mask sequence (that is, the first mask sequence) as a mask sequence corresponding to a GF resource of the UE.

For another example, if the first information delivered by the network device includes the plurality of mask sequences and the index information of the beam corresponding to the first mask sequence, after determining that the signaling carrying the first information is sent to the UE, the UE determines, from the plurality of received mask sequences based on the index information of the beam corresponding to the first mask sequence, the first mask sequence as a mask sequence corresponding to a GF resource of the UE.

For another example, if the first information delivered by the network device includes the generation parameters of the plurality of mask sequences and the index information of the beam corresponding to the first mask sequence, after determining that the signaling carrying the first information is sent to the UE, the UE generates the plurality of mask sequences based on the generation relationship and the received generation parameters, and determines, from the plurality of determined mask sequences based on the index information of the beam, the first mask sequence as a mask sequence corresponding to a GF resource of the UE.

For another example, if the first information delivered by the network device includes the mapping relationship between the plurality of mask sequences and different beams (or signals bound to the beam information), after determining that the signaling carrying the first information is sent to the UE, the UE determines the first mask sequence based on the beam information known to the UE. Specifically, when the network side delivers a mapping relationship between the beam information and the mask sequence, the beam information may be from the beam identifier directly indicated by the network side, or may be beam information obtained by the UE based on the signal bound to the beam information. Alternatively, when the network side delivers a mapping relationship between the mask sequence and the signal bound to the beam information, the UE determines the mask sequence based on a signal identifier bound to the beam information. The SSB signal is used as an example. The UE determines, by measuring signal quality obtained by measuring different SSB signals, an optimal SSB signal used by the UE, and determines, based on an identifier of the optimal SSB signal, a corresponding mask sequence, that is, the first mask sequence.

For another example, if the first information delivered by the network device includes the generation parameters of the plurality of mask sequences, after determining that the signaling carrying the first information is sent to the UE, the UE obtains the plurality of mask sequences through calculation based on the generation relationship and the generation parameters, and determines, based on the beam information known to the UE, the first mask sequence from the plurality of mask sequences determined through calculation.

For another example, if the first information delivered by the network device is the mapping relationship between the plurality of mask sequences and the plurality of reference signal identifiers and the identification information of the first reference signal corresponding to the subcell in which the UE is located, the UE determines, based on the identification information of the first reference signal and the mapping relationship, the first mask sequence corresponding to the identification information of the first reference signal.

For another example, if the first information delivered by the network device is the index of the mapping relationship (for example, the index corresponding to the first mask sequence). The mapping relationship is preconfigured by the network device, predefined in the protocol, or pre-agreed on, and the UE determines the first mask sequence based on the index of the mapping relationship.

604: The UE performs scheduling-free transmission based on the determined first indication sequence.

Specifically, the UE may determine, based on the first indication sequence, a first scheduling-free resource that is in scheduling-free resources corresponding to a first subcell in which the UE is located and that can be used for the scheduling-free transmission. When the UE has a scheduling-free transmission requirement, the UE performs scheduling-free transmission on the first scheduling-free resource. It should be understood that the UE performs scheduling-free transmission on some or all of the first scheduling-free resources based on the scheduling-free transmission requirement, and using the some or all of the first scheduling-free resources depends on an amount of data that needs to be sent and/or received on the UE side.

An example in which the mask sequence is applied to the slot is used. Based on the first mask sequence, the UE performs CG transmission, and listens to corresponding scheduling-free feedback signaling in a slot whose mask is set to 1 in the first mask sequence. If the mask sequence is applied to the scheduling-free resource, the UE performs scheduling-free transmission on a scheduling-free resource that is in the N scheduling-free resources to which the mask sequence is applied and whose mask is set to 1.

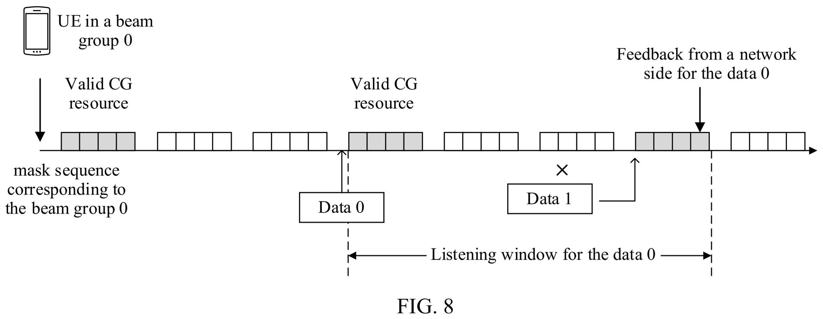

FIG. 8 is a diagram of scheduling-free transmission and scheduling-free feedback signaling listening performed by UE based on a mask sequence. As shown in FIG. 8, for example, if the mask sequence is applied to a slot, UE performs data transmission based on a scheduling-free resource in a slot whose mask is set to 1. When entering a slot whose mask is set to 0, the UE stops data transmission. In this case, even if a new transmission requirement arrives, the UE waits for a next slot whose mask is set to 1, to perform transmission. If a start point (for example, a start point for transmitting data 0) at which the UE performs data transmission and a timer exceed a time range in which the UE is currently located and that corresponds to a plurality of slots whose masks are set to 1, the UE needs to continue to listen to a feedback result of the scheduling-free transmission in a time period corresponding to a next plurality of slots whose masks are set to 1. It should be understood that the timer is configured to determine time for receiving feedback signaling for the data.

In addition, in this application, it is further considered that because an NTN covers a wide area, and UE density and transmission requirements of different ground regions are different, service requirements of some ground regions are high, and service requirements of some ground regions are low. In this case, scheduling-free resources in some ground regions may be reallocated based mask sequences, to improve resource utilization. For example, when service requirements of some ground regions increase, a network device may reconfigure scheduling-free resources of the ground regions, to increase a quantity of masks set to 1 in mask sequences corresponding to the ground regions. After the service requirements of the ground regions decrease, the network device may perform reconfiguration for another time, to reduce the quantity of masks set to 1 in the mask sequences corresponding to the ground regions. In addition, the network device may reconfigure the scheduling-free resources in the some ground regions based on a load status of the network device. For example, when the network device is overloaded, the network device may reduce the quantity of masks whose values are 1 in the mask sequences, to reduce load of the network device.

In summary, after the network device indicates a first indication sequence to the UE, due to some other reasons, for example, a service requirement in a ground region in which the UE is located increases or decreases, or the load of the network device changes, the network device needs to indicate a new indication sequence (referred to as a second indication sequence or a second mask sequence) to the UE, to reconfigure a scheduling-free resource in the ground region in which the UE is located.

For example, second mask sequences may be different mask sequences delivered by the network device to different ground regions through prediction and adjustment by modeling service requirements of different ground regions. For example, some ground regions are desert regions or sparsely populated regions, have large areas, and have a large quantity of UEs, but have no ground coverage. Therefore, in this case, a quantity of pieces of $b_j(i)$ in a sequence $b_j(i) = 1$ needs to be maximized, to meet a communication service requirement of the foregoing ground region. If the ground region is a densely populated urban region and has good ground coverage, a possibility of using an NTN scheduling-free resource to perform transmission in the ground region is low, and a quantity of pieces of $b_j(i) = 1$ in a mask sequence may be appropriately reduced, to reserve more resources for the deserted ground region or the sparsely populated ground region.

The second mask sequence configuration may be that when the network device detects that service requirements of scheduling-free transmission in some ground regions are high (for example, in an emergency like an earthquake or a disaster relief), the network device delivers a temporary mask sequence, and temporarily configures a mask sequence corresponding to a scheduling-free resource in another ground region to a low activation mode (that is, most regions of a large quantity of pieces of original $b_j(i) = 1$ are configured as 0, and only regions of a small quantity of pieces of $b_j(i) = 1$ are retained) or a temporary deactivation mode (that is, all original $b_j(i) = 1$ is modified to $b_j(i) = 0$). A large quantity of (all) scheduling-free resources are made to be exclusive to the ground region with the high requirement.

In this case, the network device may deliver the second mask sequence (or other information used to determine the second mask sequence) to a related ground region, and UE in the region determines a scheduling-free resource based on the second mask sequence.

For ease of description, information used to determine the second mask sequence is referred to as second information in the specification.

To ensure that the second mask sequence can be valid in time, signaling carrying the second information may further carry information about valid time. For example, the second mask sequence starts to be valid from a system time value. The time value may be an absolute value, or may be a relative value. After obtaining the second mask sequence, the UE correspondingly adjusts the scheduling-free transmission. If the signaling carrying the second information does not carry the information about the valid time, the UE immediately uses the second mask sequence to enable the scheduling-free transmission; or if the signaling carrying the second information carries the information about the valid time, the UE starts to use the second mask sequence to enable the scheduling-free transmission after the valid time.

Optionally, there may be a plurality of specific implementations in which the network device delivers the second information for the UE to determine the second mask sequence. For details, refer to the plurality of implementations in which the network device delivers the first information for the UE to determine the first mask sequence in FIG. 6. For brevity, details are not described again.

The second information may alternatively be delivered to the UE through unicast, multicast, or broadcast. This is not limited. In addition, the signaling carrying the second information may alternatively be DCI, RRC signaling, or the like.

For a process in which the UE parses the signaling carrying the second information, refer to the description of the process in which the UE parses the signaling carrying the first information. Details are not described again.

It can be learned that, when learning of the scheduling-free resources configured by the network side, the UE may determine, based on an indication sequence configured by the network for the UE (or a subcell in which the UE is located), whether the scheduling-free resources are available, to ignore an unavailable scheduling-free resource, and perform scheduling-free transmission only on the available scheduling-free resources. This can avoid a transmission failure caused by the UE using an invalid scheduling-free resource to perform data transmission in a coverage hole. In addition, in this application, reconfiguring the scheduling-free resource based on the indication sequence is highly flexible, and fewer signaling overheads are caused. This helps properly allocate and adjust the scheduling-free resource, and improve resource utilization efficiency.

The foregoing describes in detail a scheduling-free transmission resource configuration method provided in this application. The following describes a communication apparatus provided in this application.

Refer to FIG. 13. This application provides a communication apparatus 1000.

The communication apparatus 1000 includes a processing module 1001 and a communication module 1002. The communication apparatus 1000 may be a terminal device, or may be a communication apparatus, for example, a chip, a chip system, or a circuit, that is used in the terminal device or that is used in combination with the terminal device and that can implement a method performed by the terminal device. Alternatively, the communication apparatus 1000 may be a network device, or may be a communication apparatus, for example, a chip, a chip system, or a circuit, that is used in the network device or that is used in combination with the network device and that can implement a method performed by the network device.

The communication module may also be referred to as a transceiver module, a transceiver, a transceiver device, a transceiver apparatus, or the like. The processing module may also be referred to as a processor, a processing board, a processing unit, a processing apparatus, or the like. Optionally, the communication module is configured to perform a sending operation and a receiving operation of the terminal device or the network device in the foregoing methods. A component configured to implement a receiving function in the communication module may be considered as a receiving unit, and a component configured to implement a sending function in the communication module may be considered as a sending unit. In other words, the communication module includes the receiving unit and the sending unit.

When the communication apparatus 1000 is used in the terminal device, the processing module 1001 may be configured to implement a processing function of the terminal device in embodiments in FIG. 3 to FIG. 8, and the communication module 1002 may be configured to implement receiving and sending functions of the terminal device in embodiments in FIG. 3 to FIG. 8.

When the communication apparatus 1000 is used in the network device, the processing module 1001 may be configured to implement a processing function of the network device in embodiments in FIG. 3 to FIG. 8, and the communication module 1002 may be configured to implement receiving and sending functions of the network device in embodiments in FIG. 3 to FIG. 8.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using an entity apparatus. For example, if the apparatus is implemented by using a chip/chip circuit, the communication module may be an input/output circuit and/or a communication interface, and performs an input operation (corresponding to the foregoing receiving operation) and an output operation (corresponding to the foregoing sending operation). The processing module is an integrated processor, a microprocessor, an integrated circuit, a logic circuit, or the like.

In this apparatus embodiment of this application, the module division is an example, and is merely logical function division and may be another division manner during actual implementation. In addition, functional modules in the examples of this application may be integrated into one processor, or each of the functional modules may exist alone physically, or two or more modules may be integrated into one module. The integrated module may be implemented in a form of hardware, or may be implemented in a form of a software function module.

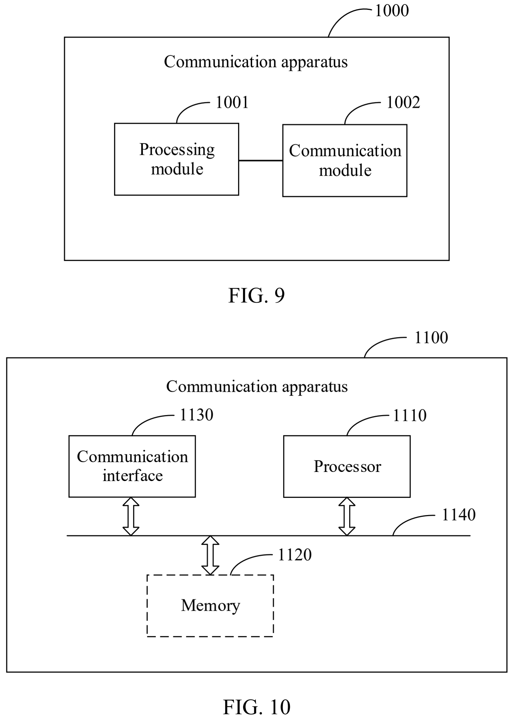

Refer to FIG. 10. This application further provides a communication apparatus 1100. Optionally, the communication apparatus 1100 may be a chip or a chip system. Optionally, in this application, the chip system may include a chip, or may include a chip and another discrete component.

The communication apparatus 1100 may be configured to implement a function of any network element (for example, the terminal device or the network device) in the communication system described in the foregoing examples. The communication apparatus 1100 may include at least one processor 1110. Optionally, the processor 1110 is coupled to a memory. The memory may be located in the apparatus. Alternatively, the memory may be integrated with the processor. Alternatively, the memory may be located outside the apparatus. For example, the communication apparatus 1100 may further include at least one memory 1120. The memory 1120 stores a computer program, a computer program or instructions, and/or data necessary for implementing any one of the foregoing examples. The processor 1110 may execute the computer program stored in the memory 1120, to complete the method in any one of the foregoing examples.

The communication apparatus 1100 may further include a communication interface 1130, and the communication apparatus 1100 may exchange information with another device through the communication interface 1130. For example, the communication interface 1130 may be a transceiver, a circuit, a bus, a module, a pin, or a communication interface of another type. When the communication apparatus 1100 is a chip-type apparatus or circuit, the communication interface 1130 in the apparatus 1100 may alternatively be an input/output circuit, and may input information (or referred to as receiving information) and output information (or referred to as sending information). The processor is an integrated processor, a microprocessor, an integrated circuit, or a logic circuit. The processor may determine output information based on input information.

The coupling in this application may be an indirect coupling or a communication connection between apparatuses, units, or modules in an electrical form, a mechanical form, or another form, and is used for information exchange between the apparatuses, the units, or the modules. The processor 1110 may operate cooperatively with the memory 1120 and the communication interface 1130. A specific connection medium between the processor 1110, the memory 1120, and the communication interface 1130 is not limited in this application.

Optionally, as shown in FIG. 10, the processor 1110, the memory 1120, and the communication interface 1130 are connected to each other through a bus 1140. A type of the bus 1140 is not limited. For example, the bus 1140 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by using only one line in FIG. 10, but it does not mean that there is only one bus or only one type of bus.

Optionally, the memory and the processor in the foregoing apparatus embodiments may be physically independent units, or the memory and the processor may be integrated together. This is not limited in this specification.

In addition, this application further provides a computer-readable storage medium. The computer-readable storage medium stores computer instructions. When the computer instructions are run on a computer, an operation and/or processing performed by the network device or the terminal device in the method embodiments of this application are/is performed.

In addition, this application further provides a computer program product. The computer program product includes computer program code or instructions. When the computer program code or the instructions are run on a computer, an operation and/or processing performed by the network device or the terminal device in the method embodiments of this application are/is performed.

In this application, the processor may be a general-purpose processor, a digital signal processor, an application-specific integrated circuit, a field programmable gate array or another programmable logic device, a discrete gate or transistor logic device, or a discrete hardware component, and may implement or perform methods, steps, and logical block diagrams that are disclosed in this application. The general-purpose processor may be a microprocessor or any conventional processor or the like. The steps of the methods disclosed with reference to this application may be directly implemented by a hardware processor, or may be implemented by a combination of hardware and a software module in a processor.

In this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of instructions or a data structure and that can be accessed by a computer, but is not limited thereto. The memory in this application may alternatively be a circuit or any other apparatus that can implement a storage function, and is configured to store program instructions and/or data.

In a possible implementation, the communication apparatus 1100 may be used in the network device. Specifically, the communication apparatus 1100 may be the network device, or may be an apparatus that can support the network device to implement a corresponding function of the network device in any one of the foregoing examples. The memory 1120 stores a computer program (or instructions) and/or data for implementing the functions of the network device in any one of the foregoing examples. The processor 1110 may execute the computer program stored in the memory 1120, to complete the method performed by the network device in any one of the foregoing examples. The communication interface in the communication apparatus 1100 may be configured to interact with the terminal device, and send information to the terminal device or receive information from the terminal device.

In another possible implementation, the communication apparatus 1100 may be used in the terminal device. Specifically, the communication apparatus 1100 may be the terminal device, or may be an apparatus that can support the terminal device to implement a function of the terminal device in any one of the foregoing examples. The memory 1120 stores a computer program (or instructions) and/or data for implementing the functions of the terminal device in any one of the foregoing examples. The processor 1110 may execute the computer program stored in the memory 1120, to complete the method performed by the terminal device in any one of the foregoing examples. The communication interface in the communication apparatus 1100 may be configured to interact with the network device, and send information to the network device or receive information from the network device.

Based on the foregoing embodiments, this application further provides a communication system, including a network device and a terminal device. The communication system can implement the scheduling-free resource configuration method provided in embodiments shown in FIG. 3 to FIG. 8.

All or some of the technical solutions provided in this application may be implemented by using software, hardware, firmware, or any combination thereof. When the software is used to implement embodiments, all or a part of embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, a terminal device, an access network device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device like a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, without a logical contradiction, mutual reference can be made between examples. For example, mutual reference can be made between methods and/or terms in the method embodiments, mutual reference can be made between functions and/or terms in the apparatus embodiments, and mutual reference can be made between functions and/or terms in the apparatus examples and the method examples.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

A plurality of (items) in embodiments of this application means two (items) or more than two (items). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although terms such as first and second may be used in this disclosure to describe objects, these objects are not limited by these terms. These terms are merely used to distinguish the objects from each other.

The term "include" and any other variant thereof mentioned in embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device.

In addition, words such as "example" or "for example" are used to represent giving examples, illustrations, or descriptions. Any method or design solution described in this application as "example" or "for example" should not be explained as being more preferred or advantageous over another method or design solution. Exactly, use of the word like "example" or "for example" is intended to present a related concept in a specific manner.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium, for example, a USB flash drive, a removable hard disk, a read-only memory (Read-Only Memory, ROM), a random access memory (Random Access Memory, RAM), a magnetic disk, an optical disc, or the like that can store program code.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

**1.** A scheduling-free resource configuration method, applied to a first communication apparatus, and comprising:

> receiving first information from a second communication apparatus;
> determining a first indication sequence based on the first information;
> determining, based on the first indication sequence, a first scheduling-free resource that is in scheduling-free resources of the first communication apparatus and that is capable of being used for scheduling-free transmission; and

performing the scheduling-free transmission based on the first scheduling-free resource.

2. The method according to claim 1, wherein the first indication sequence is determined based on a scheduling-free transmission requirement of a subcell in which the first communication apparatus is located or a decision of the second communication apparatus for the scheduling-free transmission.

3. The method according to claim 1 or 2, wherein the first information comprises one or more of the following:

the first indication sequence;

a length of the first indication sequence;

a generation parameter of the first indication sequence, wherein the generation parameter comprises one or more of the following: a time domain start point of at least one first scheduling-free resource, duration of the at least one first scheduling-free resource, a quantity of first scheduling-free resources, and a derivation parameter of the time domain start point of the at least one first scheduling-free resource;

identification information of the first indication sequence;

a mapping relationship between a plurality of indication sequences and a plurality of reference signal identifiers, and identification information of a first reference signal corresponding to the subcell in which the first communication apparatus is located, wherein the plurality of indication sequences comprise the first indication sequence;

information about a mapping relationship between a plurality of indication sequences and a plurality of reference signal identifiers, wherein each of the plurality of indication sequences corresponds to one of the plurality of reference signal identifiers;

a plurality of indication sequences, wherein the plurality of indication sequences respectively correspond to a plurality of reference signal identifiers;

respective generation parameters of a plurality of indication sequences and identification information of a first reference signal corresponding to a subcell in which the terminal device is located, wherein the plurality of indication sequences respectively correspond to a plurality of reference signals, and the plurality of indication sequences comprise the first indication sequence; and

respective generation parameters of a plurality of indication sequences, wherein the plurality of indication sequences comprise the first indication sequence.

4. The method according to claim 3, wherein the first information comprises the information about the mapping relationship between a plurality of indication sequences and a plurality of reference signal identifiers, and the information about the mapping relationship comprises the mapping relationship or an index of the mapping relationship.

5. The method according to any one of claims 1 to 4, wherein the first information further comprises validation time information of the first indication sequence, and the validation time information indicates a validation moment at which the first scheduling-free resource determined based on the first indication sequence is applied to the scheduling-free transmission.

6. The method according to any one of claims 1 to 5, wherein the first information comprises the mapping relationship between a plurality of indication sequences and a plurality of reference signal identifiers; and determining the first indication sequence based on the first information comprises:

obtaining an identifier of the first reference signal corresponding to the subcell in which the first communication apparatus is located; and

determining, from the plurality of indication sequences based on the identifier of the first reference signal and the mapping relationship, the first indication sequence corresponding to the identifier of the first reference signal.

7. The method according to any one of claims 1 to 5, wherein the first information comprises a mapping relationship between a plurality of indication sequences and a plurality of reference signals, and the identification information of the first reference signal corresponding to the subcell in which the first communication apparatus is located; and determining the first indication sequence based on the first information comprises:

determining the first indication sequence from the plurality of indication sequences based on the identification information of the first reference signal and the mapping relationship.

8. A scheduling-free resource configuration method, applied to a second communication apparatus, and comprising:

   determining a first indication sequence, wherein the first indication sequence indicates a first scheduling-free resource that is in scheduling-free resources of a first communication apparatus and that is capable of being used for scheduling-free transmission; and
   sending first information to the first communication apparatus, wherein the first information is used by the first communication apparatus to determine the first indication sequence.

9. The method according to claim 8, wherein the first indication sequence is determined based on a scheduling-free transmission requirement of a subcell in which the first communication apparatus is located or a decision of the second communication apparatus for the scheduling-free transmission.

10. The method according to claim 8 or 9, wherein the first information comprises one or more of the following:

    the first indication sequence;
    a length of the first indication sequence;
    a generation parameter of the first indication sequence, wherein the generation parameter comprises one or more of the following: a time domain start point of at least one first scheduling-free resource, duration of the at least one first scheduling-free resource, a quantity of first scheduling-free resources, and a derivation parameter of the time domain start point of the at least one first scheduling-free resource;
    identification information of the first indication sequence;
    a mapping relationship between a plurality of indication sequences and a plurality of reference signal identifiers, and identification information of a first reference signal corresponding to the subcell in which the first communication apparatus is located, wherein the plurality of indication sequences comprise the first indication sequence;
    information about a mapping relationship between a plurality of indication sequences and a plurality of reference signal identifiers, wherein each of the plurality of indication sequences corresponds to one of the plurality of reference signal identifiers;
    a plurality of indication sequences, wherein the plurality of indication sequences respectively correspond to a plurality of reference signal identifiers;
    respective generation parameters of a plurality of indication sequences and identification information of a first reference signal corresponding to a subcell in which the terminal device is located, wherein the plurality of indication sequences respectively correspond to a plurality of reference signals, and the plurality of indication sequences comprise the first indication sequence; and
    respective generation parameters of a plurality of indication sequences, wherein the plurality of indication sequences comprise the first indication sequence.

11. The method according to claim 10, wherein the first information comprises the information about the mapping relationship between a plurality of indication sequences and a plurality of reference signal identifiers, and the information about the mapping relationship comprises the mapping relationship or an index of the mapping relationship.

12. The method according to any one of claims 8 to 11, wherein the first information further comprises validation time information of the first indication sequence, and the validation time information indicates a validation moment at which the first scheduling-free resource determined based on the first indication sequence is applied to the scheduling-free transmission.

13. A communication apparatus, comprising:

    a communication module, configured to receive first information from a second communication apparatus; and
    a processing module, configured to:

       determine a first indication sequence based on the first information;
       determine, based on the first indication sequence, a first scheduling-free resource that is in scheduling-free resources of the first communication apparatus and that is capable of being used for scheduling-free transmission, wherein
       the communication module and the processing module are further configured to perform the scheduling-free transmission based on the first scheduling-free resource.

14. The communication apparatus according to claim 13, wherein the first indication sequence is determined based on a scheduling-free transmission requirement of a subcell in which the communication apparatus is located or a decision of the second communication apparatus for the scheduling-free transmission.

15. The communication apparatus according to claim 13 or 14, wherein the first information comprises one or more of the following:

the first indication sequence;
a length of the first indication sequence;
a generation parameter of the first indication sequence, wherein the generation parameter comprises one or more of the following: a time domain start point of at least one first scheduling-free resource, duration of the at least one first scheduling-free resource, a quantity of first scheduling-free resources, and a derivation parameter of the time domain start point of the at least one first scheduling-free resource;
identification information of the first indication sequence;
a mapping relationship between a plurality of indication sequences and a plurality of reference signal identifiers, and identification information of a first reference signal corresponding to a subcell in which the first communication apparatus is located, wherein the plurality of indication sequences comprise the first indication sequence;
information about a mapping relationship between a plurality of indication sequences and a plurality of reference signal identifiers, wherein each of the plurality of indication sequences corresponds to one of the plurality of reference signal identifiers;
a plurality of indication sequences, wherein the plurality of indication sequences respectively correspond to a plurality of reference signal identifiers;
respective generation parameters of a plurality of indication sequences and identification information of a first reference signal corresponding to a subcell in which the terminal device is located, wherein the plurality of indication sequences respectively correspond to a plurality of reference signals, and the plurality of indication sequences comprise the first indication sequence; and
respective generation parameters of a plurality of indication sequences, wherein the plurality of indication sequences comprise the first indication sequence.

16. The communication apparatus according to claim 15, wherein the first information comprises the information about the mapping relationship between a plurality of indication sequences and a plurality of reference signal identifiers, and the information about the mapping relationship comprises the mapping relationship or an index of the mapping relationship.

17. The communication apparatus according to any one of claims 13 to 16, wherein the first information further comprises validation time information of the first indication sequence, and the validation time information indicates a validation moment at which the first scheduling-free resource determined based on the first indication sequence is applied to the scheduling-free transmission.

18. The communication apparatus according to any one of claims 13 to 17, wherein the first information comprises the mapping relationship between a plurality of indication sequences and a plurality of reference signal identifiers; and the processing module is configured to:

obtain an identifier of the first reference signal corresponding to the subcell in which the communication apparatus is located; and
determine, from the plurality of indication sequences based on the identifier of the first reference signal and the mapping relationship, the first indication sequence corresponding to the identifier of the first reference signal.

19. The communication apparatus according to any one of claims 13 to 17, wherein the first information comprises a mapping relationship between a plurality of indication sequences and a plurality of reference signals, and the identification information of the first reference signal corresponding to the subcell in which the communication apparatus is located; and
the processing module is configured to:
determine the first indication sequence from the plurality of indication sequences based on the identification information of the first reference signal and the mapping relationship.

20. A communication apparatus, comprising:

a processing module, configured to determine a first indication sequence, wherein the first indication sequence indicates a first scheduling-free resource that is in scheduling-free resources of a first communication apparatus and that is capable of being used for scheduling-free transmission; and

a communication module, configured to send first information to the first communication apparatus, wherein the first information is used by the first communication apparatus to determine the first indication sequence.

21. The communication apparatus according to claim 20, wherein the first indication sequence is determined based on a scheduling-free transmission requirement of a subcell in which the first communication apparatus is located or a decision of the communication apparatus for the scheduling-free transmission.

22. The communication apparatus according to claim 20 or 21, wherein the first information comprises one or more of the following:

the first indication sequence;

a length of the first indication sequence;

a generation parameter of the first indication sequence, wherein the generation parameter comprises one or more of the following: a time domain start point of at least one first scheduling-free resource, duration of the at least one first scheduling-free resource, a quantity of first scheduling-free resources, and a derivation parameter of the time domain start point of the at least one first scheduling-free resource;

identification information of the first indication sequence;

a mapping relationship between a plurality of indication sequences and a plurality of reference signal identifiers, and identification information of a first reference signal corresponding to the subcell in which the first communication apparatus is located, wherein the plurality of indication sequences comprise the first indication sequence;

information about a mapping relationship between a plurality of indication sequences and a plurality of reference signal identifiers, wherein each of the plurality of indication sequences corresponds to one of the plurality of reference signal identifiers;

a plurality of indication sequences, wherein the plurality of indication sequences respectively correspond to a plurality of reference signal identifiers;

respective generation parameters of a plurality of indication sequences and identification information of a first reference signal corresponding to a subcell in which the terminal device is located, wherein the plurality of indication sequences respectively correspond to a plurality of reference signals, and the plurality of indication sequences comprise the first indication sequence; and

respective generation parameters of a plurality of indication sequences, wherein the plurality of indication sequences comprise the first indication sequence.

23. The communication apparatus according to claim 22, wherein the first information comprises the information about the mapping relationship between a plurality of indication sequences and a plurality of reference signal identifiers, and the information about the mapping relationship comprises the mapping relationship or an index of the mapping relationship.

24. The communication apparatus according to any one of claims 20 to 23, wherein the first information further comprises validation time information of the first indication sequence, and the validation time information indicates a validation moment at which the first scheduling-free resource determined based on the first indication sequence is applied to the scheduling-free transmission.

25. A communication apparatus, comprising:
a processor, wherein the processor is coupled to a memory, and the processor is configured to invoke computer program instructions stored in the memory, to perform the method according to any one of claims 1 to 12.

26. A chip, comprising a processor and a communication interface, wherein the communication interface is configured to: receive data and/or information, and transmit the received data and/or information to the processor, and the processor processes the data and/or the information, to perform the method according to any one of claims 1 to 7 or the method according to any one of claims 8 to 12.

27. A computer-readable storage medium, wherein the computer-readable storage medium stores instructions, and when the instructions are run on a computer, the computer is enabled to perform the method according to any one of claims 1 to 12.

28. A computer program product, wherein the computer-readable storage medium stores instructions, and when the instructions are run on a computer, the computer is enabled to perform the method according to any one of claims 1 to 12.

29. A communication system, comprising the communication apparatus according to any one of claims 13 to 19 and/or the communication apparatus according to any one of claims 20 to 24.

FIG. 1

FIG. 2

FIG. 3

Invalid CG resource

Valid CG resource

Invalid CG resource

Beam leaves mask=0

Beam service time mask=1

Beam leaves mask=0

FIG. 4

500

Second communication apparatus

First communication apparatus

510: First information

520: Determine a first indication sequence based on the first information

530: Determine, based on the first indication sequence, a first scheduling-free resource that is in scheduling-free resources of the first communication apparatus and that can be used for scheduling-free transmission

540: Scheduling-free transmission

FIG. 5

600

| Network device | | Terminal device |

601: Determine a beam-based indication sequence

602: First information →

603: Determine a first indication sequence based on the first information

← 604: Perform scheduling-free transmission based on the first indication sequence

FIG. 6

Frequency f

Scheduling-free resources configured by a network side

| | CG-1 | CG-1 | CG-1 | ... |

| | CG-2 | CG-2 | ... |

Time t

Time unit 1   Time unit 2   Time unit 3

Beam group 1
mask sequence 1

| 1 | 0 | 1 |

CG-1   CG-1   CG-1

CG-2   CG-2

Beam group 2
mask sequence 2

| 0 | 1 | 0 |

CG-1   CG-1   CG-1

CG-2   CG-2

(a)

Beam group 1
mask sequence 1

| 1 | 0 | 1 |

CG-1   CG-1   CG-1

CG-2   CG-2   CG-2

Beam group 2
mask sequence 2

| 0 | 1 | 0 |

CG-1   CG-1   CG-1

CG-2   CG-2   CG-2

(b)

FIG. 7

EP 4 648 462 A1

UE in a beam
group 0

Valid CG
resource

Valid CG
resource

Feedback from a network
side for the data 0

mask sequence
corresponding to
the beam group 0

Data 0

× 

Data 1

Listening window for the data 0

FIG. 8

1000

Communication apparatus

1001

Processing module

1002

Communication module

FIG. 9

1100

Communication apparatus

1130

Communication interface

1110

Processor

1140

1120

Memory

FIG. 10

## INTERNATIONAL SEARCH REPORT

| International application No. |
| --- |
| **PCT/CN2023/076784** |

### A. CLASSIFICATION OF SUBJECT MATTER

H04W 24/02(2009.01)i

According to International Patent Classification (IPC) or to both national classification and IPC

### B. FIELDS SEARCHED

Minimum documentation searched (classification system followed by classification symbols)

IPC: H04W H04Q H04L

Documentation searched other than minimum documentation to the extent that such documents are included in the fields searched

Electronic data base consulted during the international search (name of data base and, where practicable, search terms used)

CNTXT, DWPI, ENTXTC, CNKI, CJFD: 免调度, 免授权, 配置, 序列, 比特, 资源, 频域, 时域, 指示, 标识, 表示, 参数, 掩码, scheduling, grant, free, without, configuration, sequence, bit, resource, frequency, time, domain, indication, mask

### C. DOCUMENTS CONSIDERED TO BE RELEVANT

| Category* | Citation of document, with indication, where appropriate, of the relevant passages | Relevant to claim No. |
| --- | --- | --- |
| Y | WO 2021179325 A1 (HUAWEI TECHNOLOGIES CO., LTD.) 16 September 2021 (2021-09-16) abstract, description, page 14 line 20-page 15 line 40, page 23 line 3-page 27 line 5, and figures 1-14 | 1-29 |
| Y | WO 2021088085 A1 (HUAWEI TECHNOLOGIES CO., LTD.) 14 May 2021 (2021-05-14) abstract, description, page 10 line 10-page 12 line 18, and figures 2-11 | 1-29 |
| A | CN 113692002 A (MOBILE COMMUNICATION TECHNOLOGY CO. LTD.) 23 November 2021 (2021-11-23) entire document | 1-29 |
| A | CN 108633005 A (VIVO COMMUNICATION TECHNOLOGY CO., LTD.) 09 October 2018 (2018-10-09) entire document | 1-29 |
| A | US 2018279363 A1 (SAMSUNG ELECTRONICS CO., LTD.) 27 September 2018 (2018-09-27) entire document | 1-29 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **31 October 2023** | **09 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/076784**

| Patent document cited in search report | | | Publication date (day/month/year) | Patent family member(s) | | | Publication date (day/month/year) |
|---|---|---|---|---|---|---|---|
| WO | 2021179325 | A1 | 16 September 2021 | None | | | |
| WO | 2021088085 | A1 | 14 May 2021 | CN | 114600516 | A | 07 June 2022 |
| CN | 113692002 | A | 23 November 2021 | None | | | |
| CN | 108633005 | A | 09 October 2018 | None | | | |
| US | 2018279363 | A1 | 27 September 2018 | US | 2020305190 | A1 | 24 September 2020 |
| | | | | WO | 2018174526 | A1 | 27 September 2018 |
| | | | | KR | 20230082057 | A | 08 June 2023 |
| | | | | CN | 108633096 | A | 09 October 2018 |
| | | | | KR | 20190125355 | A | 06 November 2019 |
| | | | | EP | 3603303 | A1 | 05 February 2020 |

Form PCT/ISA/210 (patent family annex) (July 2022)